# FASCICULE DE BREVET EUROPEEN

(11) **EP 2 019 264 B1**
(45) Date de publication et mention de la délivrance du brevet: **13.04.2016**
(21) Numéro de dépôt: 08159149.7
(22) Date de dépôt: 27.06.2008
(51) Int. Cl.: F23R 3/60

(54) **Chambre de combustion d'une turbomachine**
Brennkammer einer Turbomaschine
Combustion chamber of a turbomachine

(30) Priorité: 26.07.2007 FR 0705452
(43) Date de publication de la demande: 28.01.2009
(73) Titulaire: Snecma, 75015 Paris (FR)
(72) Inventeur: Commaret, Patrice, André, 77950, Rubelles (FR); Duval, Sylvain, 77220, Tournan en Brie (FR); Hernandez, Didier, Hippolyte, 77720, Quiers (FR); Vuillemenot, Yann, François, Jean-Claude, 75011, Paris (FR)
(74) Mandataire: Ramey, Daniel

(56) Documents cités:
- EP-A- 1 265 037
- EP-A- 1 777 460
- EP-A- 1 793 095
- DE-A1- 4 340 530
- FR-A- 1 551 357
- FR-A- 2 686 683
- GB-A- 2 115 877
- GB-A- 2 135 440
- GB-A- 2 242 483
- GB-A- 2 422 874
- US-A- 2 510 645
- US-A- 3 006 587
- US-A- 3 007 308
- US-A- 4 597 258
- US-B1- 6 442 946

## Description

La présente invention concerne une turbomachine, telle qu'un turboréacteur ou un turbopropulseur d'avion, équipée d'une chambre annulaire de combustion.

Une chambre annulaire de combustion d'une turbomachine, comprend deux parois de révolution coaxiales interne et externe, reliées à leurs extrémités amont par une paroi annulaire de fond de chambre rigide et comportant à leurs extrémités aval des brides de fixation à des carters interne et externe. Elle comprend également un carénage annulaire amont fixé sur le fond de chambre et destiné à orienter le flux d'air en entrée ou en contournement de la chambre de combustion. La paroi de fond de chambre et le carénage comprennent des ouvertures permettant l'entrée d'air dans la chambre et l'insertion d'injecteurs diffusant du carburant dans la chambre de combustion.

La chambre est reliée en aval par la bride externe à un carter externe d'une section de turbine agencée en sortie de la chambre de combustion.

Le montage de cette chambre dans les carters interne et externe ainsi que son mode de fixation présentent un certain nombre d'inconvénients qui dégradent les performances de la turbomachine.

En effet, le positionnement des injecteurs par rapport à la chambre, nécessaire à une bonne combustion n'est pas réalisé de manière optimale du fait du mode de fixation de la chambre. En effet, les fixations successives des différentes pièces de la chambre, à savoir celles des parois de révolution interne et externe sur le fond de chambre, puis la fixation des brides interne et externe sur des carters de la turbomachine, conduisent à une accumulation des tolérances de fabrication et de montage de chacune des pièces et donc à une imprécision sur le positionnement de la chambre dans les carters. Des lors, la fixation des injecteurs sur le carter et l'alignement de leurs têtes dans l'axe de la chambre de combustion ne peuvent être réalisés de manière précise, ce qui ne permet pas de réaliser une combustion idéale du carburant injecté dans la chambre et diminue les performances de la turbomachine.

Dans la technique actuelle, on distingue deux types de chambre de combustion selon qu'elles sont divergentes ou convergentes, c'est-à-dire selon que, de l'amont vers l'aval, la chambre s'éloigne ou se rapproche de l'axe de la turbomachine.

Le montage de la chambre de combustion dans le carter externe est généralement réalisé par l'aval et ne pose pas de difficulté particulière pour les chambres divergentes.

Dans certains cas, les chambres de combustion convergentes peuvent être préférées aux chambres divergentes car elles présentent un encombrement axial moins important. Le montage par l'aval de ces chambres dans le carter externe amène à augmenter le diamètre aval du carter externe de la chambre, ce qui conduit à une augmentation de l'encombrement radial, de la masse et du coût. L'augmentation du diamètre aval du carter induit également un désalignement du carter externe de la chambre et du carter externe de la section de turbine, diminuant les performances aérodynamiques. Enfin, une fixation de la chambre par l'amont pour éviter les problèmes précités, ne serait pas réalisable puisque cela nécessiterait d'avoir recours à des brides interne et externe fixées sur la partie amont de la chambre de combustion dans le flux de contournement avec des points de fixation dans les zones de fixation des injecteurs, ce qui crée des difficultés mécaniques et des problèmes d'écoulement d'air autour de la chambre. Le document GB 2422874 décrit une chambre de combustion annulaire convergente attachée au carter par une biellette amont.

En fonctionnement, l'écart de température entre la chambre et le carter externe peut également conduire à un désalignement des injecteurs par rapport à l'axe de la chambre du fait de la dilatation axiale de la chambre qui peut atteindre plusieurs millimètres.

La présente invention à pour objet une turbomachine, en particulier à chambre annulaire convergente, qui évite les inconvénients précités de la technique antérieure d'une façon simple, efficace et économique.

Elle propose, à cet effet, une turbomachine comprenant une chambre annulaire de combustion, comportant deux parois de révolution radialement interne et radialement externe, respectivement par rapport à l'axe de la turbomachine, reliées à leurs extrémités amont par un fond de chambre annulaire équipé de moyens d'injection de carburant, caractérisée en ce qu'elle comprend des moyens de suspension de l'extrémité amont de la chambre de combustion à un carter externe, ces moyens comportant au moins une biellette articulée à ses extrémités sur une paroi de la chambre de combustion et sur le carter externe, l'extrémité aval de la chambre de combustion étant reliée à un carter interne ou au carter externe par des liaisons ou appuis souples.

La suspension de la chambre au carter externe se fait au niveau de l'extrémité amont de la chambre, ce qui autorise le montage de la chambre par l'amont dans le carter externe et évite d'avoir à augmenter le diamètre aval du carter externe. L'alignement du carter externe de la chambre et du carter externe de la section de turbine améliore les performances aérodynamiques de la turbomachine. La suspension de la chambre à son extrémité amont améliore le positionnement de sa partie amont et permet donc d'aligner précisément les têtes d'injecteurs avec les orifices du fond de chambre, optimisant ainsi la combustion du carburant. La suppression des brides reliant la partie aval de la chambre aux carters externe et interne permet de réduire la masse de la turbomachine.

Cette biellette s'intègre parfaitement dans l'environnement mécanique des injecteurs et de la partie amont de la chambre de combustion, et ne perturbe pas l'écoulement d'air qui contourne la chambre de combustion. La liaison de la chambre au carter externe par une ou des biellettes permet de supprimer les contraintes radiales en fonctionnement qui sont appliquées à la chambre.

Avantageusement, la biellette s'étend dans un plan passant par l'axe de la turbomachine.

Selon une autre caractéristique de l'invention, une extrémité de la biellette est articulée sur l'extrémité amont de la paroi de révolution externe, son autre extrémité étant logée et articulée dans un bossage du carter en saillie vers l'extérieur. Chaque extrémité de la biellette est articulée autour d'un axe transversal sur une tige cylindrique montée dans des orifices d'une chape de la paroi externe de la chambre ou du carter, respectivement.

L'articulation de la biellette sur la chambre est placée à l'extrémité amont de la paroi de révolution externe car cette partie est plus froide que les autres parties de la chambre, ce qui permet de limiter les déformations des chapes lors de l'échauffement de la chambre en fonctionnement et optimise ainsi la position des injecteurs par rapport à la chambre.

Des douilles de guidage peuvent être serties dans les orifices des chapes, ce qui assure un bon positionnement des tiges sur les chapes de la paroi de révolution externe et permet ainsi de garantir le positionnement optimal de la chambre sur le carter externe.

Selon une autre caractéristique, les extrémités de la biellette sont articulées sur les tiges cylindriques au moyen de rotules traversées par ces tiges.

L'insertion de rotules fixes à l'intérieur des chapes autorise un basculement des tiges dans les chapes, ce qui permet de rattraper les défauts de forme des pièces ainsi que les défauts d'ajustements de la chambre par rapport au carter externe.

Dans un mode de réalisation préféré de l'invention, la chambre de combustion comprend trois biellettes réparties sur la demi-circonférence supérieure de la paroi externe de la chambre, une biellette étant dans un plan vertical passant par l'axe de la turbomachine, les deux autres biellettes étant disposées symétriquement de part et d'autre de ce plan vertical.

Les biellettes peuvent être sensiblement parallèles à l'axe de la turbomachine, ce qui permet de limiter les déplacements axiaux de la chambre de combustion et optimise le positionnement des injecteurs par rapport à la chambre lors de l'échauffement de celle-ci en fonctionnement.

Selon une autre caractéristique de l'invention, les biellettes peuvent comprendre des moyens, par exemple à vis, de réglage de longueur, permettant d'ajuster au mieux la position de la chambre dans les carters.

Les biellettes sont avantageusement reliées à la paroi externe de la chambre entre des injecteurs de carburant, afin d'améliorer la précision du positionnement des injecteurs par rapport à la chambre.

Selon l'invention, au moins l'une des parois externe ou interne de la chambre de combustion comprend à son extrémité aval une pièce souple de liaison ou d'appui sur un carter externe ou interne. La pièce de liaison souple peut être fixée par soudage ou brasage sur la chambre et vient en appui sensiblement radial sur un carter.

L'utilisation de pièces souples permet de limiter les vibrations en sortie de chambre lors du fonctionnement de la turbomachine. De telles pièces peuvent être réalisées dans des matériaux plus légers que les brides de la technique antérieure puisque l'essentiel de la tenue mécanique est assurée par les moyens de suspension en amont de la chambre de combustion.

L'extrémité aval de la paroi interne de la chambre peut être reliée par une bride annulaire flexible à un carter interne.

Dans le cas d'une chambre annulaire de combustion convergente vers l'axe de la turbomachine, celle-ci peut être montée par l'amont dans le carter externe.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'une chambre de combustion de turbomachine selon la technique antérieure ;
- la figure 2 est une demi-vue schématique en coupe axiale d'une chambre de combustion de turbomachine selon l'invention ;

- la figure 3 est une vue schématique éclatée en perspective depuis l'aval d'un système de suspension d'une chambre de combustion selon l'invention ;
- la figure 4 est une vue schématique partielle en perspective depuis l'amont d'une partie d'une chambre de combustion et de son système de suspension selon l'invention ;
- la figure 5 est une vue schématique partielle de côté et à plus grande échelle du système de suspension d'une chambre de combustion selon l'invention ;
- la figure 6 est une vue en coupe selon la ligne A-A de la partie amont de la chambre de combustion de la figure 5 ;
- la figure 7 est une vue en coupe selon la ligne B-B de la partie amont de la chambre de combustion de la figure 5 ;
- la figure 8 est une vue schématique en coupe transversale d'une chambre de combustion montrant la répartition angulaire des biellettes.

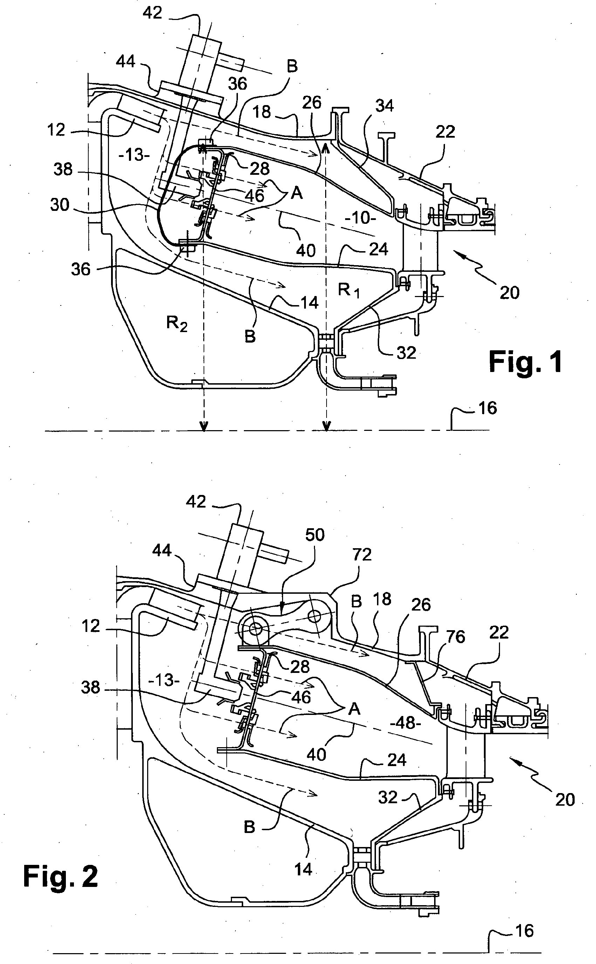

On se réfère d'abord à la figure 1 qui représente une chambre annulaire convergente de combustion 10 selon la technique antérieure et dans laquelle un diffuseur centrifuge 12 monté en sortie d'un compresseur haute pression non représenté alimente en air un espace annulaire 13 délimité par deux carters coaxiaux, l'un 14 radialement interne par rapport à l'axe 16 de la turbomachine et l'autre 18 radialement externe, et qui contient la chambre de combustion 10. Cette chambre de combustion 10 est montée en amont d'une section de turbine 20 entourée par un carter externe 22 et comprend deux parois de révolution interne 24 et externe 26 sensiblement cylindriques et coaxiales, et une paroi annulaire 28 amont de fond de chambre sur laquelle est fixé un carénage annulaire 30 qui s'étend vers l'amont. Les extrémités aval des parois 24, 26 sont reliées aux carters 14 et 18, respectivement par des brides annulaires 32 et 34. Les extrémités amont des parois de révolution radialement interne 24 et externe 26 sont fixées sur des rebords radialement interne et radialement externe de la paroi de fond de chambre 28 et du carénage 30, respectivement, par des boulons 36.

La paroi de fond de chambre 28 supporte des têtes d'injecteurs 38 qui débouchent dans la chambre de combustion 10 et qui sont orientées selon l'axe 40 de cette chambre 10. Chaque injecteur 38 s'étend à travers un orifice du carénage 30 et comporte une partie coudée qui contourne le bord externe amont du carénage 30 et est reliée à des moyens d'alimentation en carburant 42 portés par le carter externe 18. Ces moyens d'alimentation 42 sont fixés sur un bossage 44 du carter externe 18.

En fonctionnement, le flux d'air fourni par le compresseur haute pression et sortant du diffuseur 12 est guidé par le carénage 30 et se divise en une partie (flèches A) qui passe au travers des orifices d'entrée d'air du carénage 30 et au travers d'orifices 46 correspondants du fond de chambre 28 pour alimenter la chambre de combustion 10, et en deux parties (flèches B) qui contournent la chambre de combustion 10.

Dans la technique connue, la chambre de combustion 10 est montée par l'aval et est fixée par ses brides aval 32, 34 sur les carters externes 18, 22 et interne 14. Lorsque la chambre est convergente 10 comme représentée sur la figure 1, il n'est possible d'insérer la chambre entre les carters interne 14 et externe 18 qu'à la condition d'augmenter le diamètre aval du carter externe 18 afin que le diamètre aval R1 du carter externe 18 soit supérieur au diamètre R2 du fond de chambre 28, ce qui induit une augmentation de la masse, de l'encombrement et du coût. Cette augmentation de diamètre induit également un désalignement des carters externe 18 et 22, ce qui perturbe l'écoulement d'air dans la veine située entre la paroi externe 26 et les carters externes 18, 22.

Une fixation amont de la chambre de combustion, qu'elle soit divergente ou bien convergente, n'est pas réalisable au moyen d'une bride similaire à celle utilisée pour la fixation aval. En effet, cela supposerait de disposer une bride dans la zone de contournement de la chambre 10, ce qui perturberait l'écoulement d'air, et de fixer cette bride dans la zone de fixation des injecteurs 38, ce qui est difficilement réalisable.

Selon l'invention, ces inconvénients ainsi que ceux mentionnés précédemment, sont évités grâce au fait que, comme représenté en figure 2, la chambre de combustion 48 est reliée à son extrémité amont au carter externe 18 par des moyens de suspension.

Ces moyens de suspension comprennent au moins une biellette 50 s'étendant dans un plan passant par l'axe 16 de la turbomachine, les extrémités de la biellette étant articulées sur la paroi externe 26 de la chambre de combustion 48 et sur le carter externe 18. L'utilisation de biellettes 50 à l'amont de la chambre 48 permet de rétablir l'alignement entre les carters externes 18 et 22 ce qui autorise un gain de masse important. De plus, les biellettes 50 ne perturbent pas l'écoulement de l'air (flèches B) contournant la chambre 48.

Chaque biellette 50 comprend un orifice 52 à chacune de ses extrémités dans lequel est insérée une rotule 54 comportant un alésage et qui est maintenue en position dans l'orifice 52 par rotation à 90°.

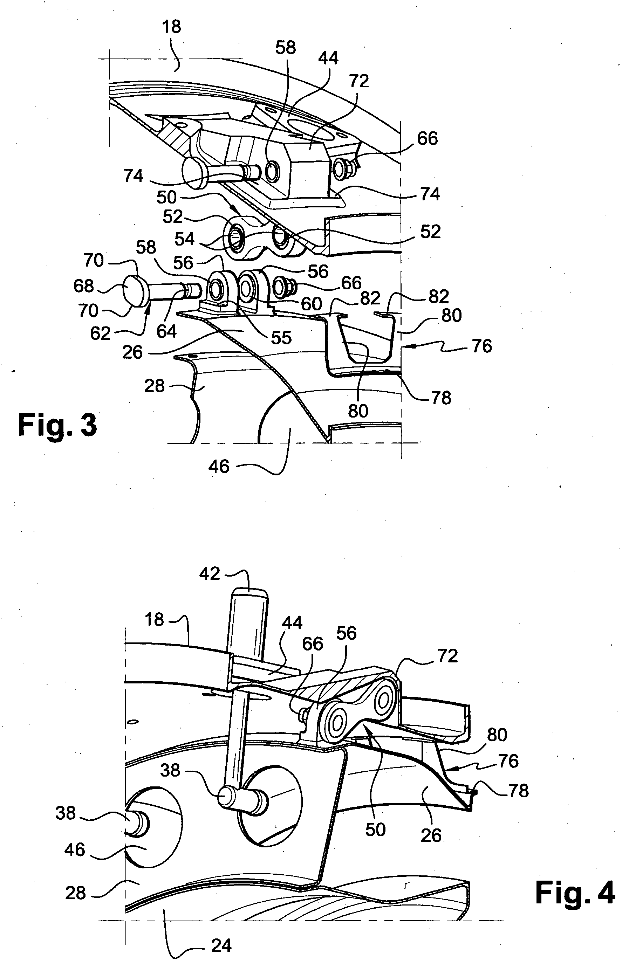

L'extrémité amont de chaque biellette 50 est insérée entre deux chapes 56 de la paroi de révolution externe 18, qui s'étendent sensiblement radialement (figures 3 et 4). Chaque chape 56 comprend un orifice transversal aligné avec l'orifice de la chape 56 voisine servant à la fixation de la biellette 50. La partie radialement interne de chaque chape comprend un rebord 55 à surface plane. Une douille 58 est montée dans chaque orifice et est sertie de manière à former un rebord 60 sur la face des chapes 56 en vis-à-vis. La fixation de la biellette 50 est assurée grâce à une tige 62 insérée à travers les orifices des chapes 56 et l'alésage de la rotule 54 de la biellette 50. La tige 62 comprend une extrémité filetée 64 recevant un écrou de fixation 66, l'autre extrémité comportant une tête 68 à deux méplats dont l'un coopère avec le rebord 55 de la chape afin d'éviter toute rotation de la tige 62 et son dévissage lors du fonctionnement de la turbomachine.

L'extrémité aval de chaque biellette 50 est insérée dans un bossage 72 du carter externe, qui est en saillie vers l'extérieur et à une forme en L. Le bossage 72 comprend deux orifices coaxiaux dans lesquels sont serties des douilles 58 de manière à former des rebords 60 à l'intérieur du bossage 72. De manière similaire aux chapes 56, le bossage comprend des parties planes 74 dont l'une est destinée à coopérer avec un méplat 70 de la tige filetée 62. Un écrou de serrage 66 permet de maintenir la tige filetée 62 en position dans les orifices du bossage 72 et l'alésage de la rotule 54 de la biellette 50.

Comme représenté sur la figure 3, le bossage 72 s'étend entre deux injecteurs 38 successifs, ce qui permet de placer la biellette 50 au plus près des injecteurs 38 afin d'obtenir un positionnement des injecteurs 38 très précis par rapport à la chambre de combustion 48. Il est ainsi possible de maîtriser l'enfoncement des injecteurs 38 pour optimiser la combustion du carburant.

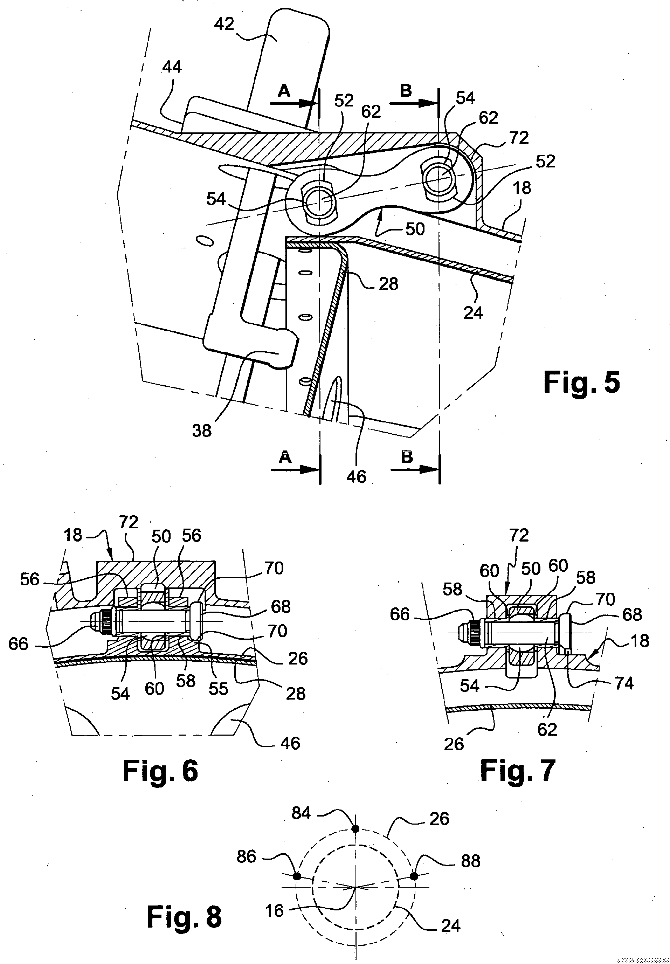

Les rotules 54 sont bloquées de chaque côté par les jupes de sertissage 60 des douilles 58. Ces douilles 58 assurent un bon positionnement des tiges 62 dans les orifices. Les douilles 58 du bossage 72 permettent également d'assurer une étanchéité à l'air contournant la chambre de combustion 48 (figures 5 à 7).

La biellette 50 est orientée sensiblement parallèlement à l'axe 16 de la turbomachine, ce qui permet de limiter les mouvements de la chambre de combustion 48 dans le sens axial. L'utilisation d'une biellette 50 articulée permet d'absorber les contraintes radiales appliquées à la chambre 48 en fonctionnement.

La fixation des biellettes 50 à l'extrémité amont de la paroi externe 26 correspondant à la zone la plus froide de la chambre de combustion 48, limite les effets de la dilatation thermique de la chambre 48 sur les chapes, ce qui permet de conserver un alignement entre les injecteurs 38 et l'axe 40 de la chambre 48 et d'optimiser la combustion du carburant.

Afin de limiter les vibrations en sortie de chambre 48, une pièce souple 76 est montée entre l'extrémité aval de la paroi de révolution externe 26 et le carter externe 18. Cette pièce 76 comprend un rebord annulaire 78 à son extrémité interne, fixé par soudage ou brasage sur la paroi externe 26, et des branches 80 s'étendant vers l'extérieur et raccordées à leurs extrémités externes à des rebords 82 en appui sur la surface interne du carter externe 18.

Lorsque la turbomachine est à l'arrêt, la pièce souple 76 est légèrement précontrainte entre la paroi de révolution externe 26 et le carter externe 18. Lors du fonctionnement de la turbomachine, la pièce souple 76 permet d'absorber au moins en partie les vibrations en sortie de chambre. La forme particulière des pièces souples 76, à extrémités externes disjointes, permet d'assurer un contact constant entre le carter externe 18 et la paroi externe 26.

Dans le mode de réalisation représenté aux dessins, la paroi de révolution interne 24 est reliée au carter interne 14 par l'intermédiaire d'une bride annulaire 32.

Dans une variante de l'invention, les deux parois de révolution interne 24 et externe 26 sont reliées par l'intermédiaire de pièces souples 76 aux carters interne 14 et externe 18, respectivement.

Dans un mode de réalisation particulier de l'invention représenté à la figure 8, la chambre est reliée au carter externe par l'intermédiaire de trois biellettes 50 réparties sur la demi-circonférence supérieure de la paroi externe 26 de la chambre 48. Une biellette 84 est placée dans un plan vertical passant par l'axe 16 de la turbomachine tandis que les deux autres biellettes 86, 88 sont disposées de manière symétrique par rapport à ce plan vertical. Les deux biellettes symétriques 86, 88 sont à environ 80° de la biellette 84, afin d'assurer au mieux leur fonction de suspension.

Avantageusement, les biellettes 50 peuvent comprendre des vis de réglage en longueur afin d'assurer un ajustement optimal de la chambre dans le carter.

Dans une variante, la fixation amont de la biellette 50 est réalisée sur le carter externe 18 et la fixation aval de la biellette 50 est réalisée sur la paroi externe 26 de la chambre 48.

L'invention est particulièrement intéressante pour être utilisée dans une turbomachine à chambre de combustion convergente pour permettre son insertion par l'amont, mais elle est également utilisable avec une chambre de combustion divergente afin d'améliorer la précision du positionnement des injecteurs par rapport à la chambre.

## Revendications

1. Turbomachine comprenant une chambre annulaire de combustion (48), comportant deux parois de révolution radialement interne (24) et radialement externe (26), respectivement par rapport à l'axe (16) de la turbomachine, reliées à leurs extrémités amont par un fond de chambre annulaire (28) équipé de moyens d'injection de carburant, **caractérisée en ce qu'**elle comprend des moyens de suspension (50) de l'extrémité amont de la chambre de combustion (48) à un carter externe (18), ces moyens comportant au moins une biellette articulée à ses extrémités sur une paroi de la chambre de combustion (48) et sur le carter externe, l'extrémité aval de la chambre de combustion (48) étant reliée à un carter interne (14) ou au carter externe (18) par des liaisons ou appuis souples (32, 76).

2. Turbomachine selon la revendication 1, **caractérisée en ce que** la biellette (50) s'étend dans un plan passant par l'axe (16) de la turbomachine.

3. Turbomachine selon la revendication 1 ou 2, **caractérisée en ce qu'**une extrémité de la biellette (50) est articulée sur l'extrémité amont de la paroi de révolution externe (26), son autre extrémité étant logée et articulée dans un bossage (72) du carter (18) en saillie vers l'extérieur.

4. Turbomachine l'une des revendications 1 à 3, **caractérisée en ce que** chaque extrémité de la biellette (50) est articulée autour d'un axe transversal sur une tige cylindrique (62) montée dans des orifices d'une chape (56) de la paroi externe (26) de la chambre ou du carter (18), respectivement.

5. Turbomachine selon la revendication 4, **caractérisée en ce que** des douilles (58) de guidage sont serties dans les orifices des chapes (56).

6. Turbomachine selon la revendication 4 ou 5, **caractérisée en ce que** les extrémités de la biellette (50) sont articulées sur les tiges cylindriques (62) au moyen de rotules (54) traversées par ces tiges (62).

7. Turbomachine selon l'une des revendications 1 à 6, **caractérisée en ce qu'**elle comprend trois biellettes (84, 86, 88) réparties sur la demi-circonférence supérieure de la paroi externe (26) de la chambre, une biellette (84) étant dans un plan vertical passant par l'axe (16) de la turbomachine, les deux autres biellettes (86, 88) étant disposées symétriquement de part et d'autre de ce plan vertical.

8. Turbomachine selon l'une des revendications 1 à 7, **caractérisée en ce que** la ou chaque biellette (50) est sensiblement parallèle à l'axe (16) de la turbomachine.

9. Turbomachine selon l'une des revendications 1 à 8, **caractérisée en ce que** la ou chaque biellette (50) comprend des moyens, par exemple à vis, de réglage de longueur.

10. Turbomachine selon l'une des revendications 1 à 9, **caractérisée en ce que** la ou chaque biellette (50) est reliée à la paroi externe (26) de la chambre entre des injecteurs de carburant (38).

11. Turbomachine selon la revendication 1, **caractérisée en ce que** la liaison ou l'appui souple est effectué avec une pièce de liaison souple (76) fixée par soudage ou brasage sur la chambre et venant en appui sensiblement radial sur un carter.

12. Turbomachine selon l'une des revendications précédentes, **caractérisée en ce que** l'extrémité aval de la paroi interne (24) de la chambre est reliée par une bride annulaire flexible (32) à un carter interne (14).

13. Turbomachine selon l'une des revendications précédentes, **caractérisée en ce que** la chambre annulaire de combustion (48) est convergente et est montée par l'amont dans le carter externe (18).

## Patentansprüche

1. Strömungsmaschine mit einer Ringbrennkammer (48), die zur Achse (16) der Strömungsmaschine zwei radial innere (24) und radial äußere (26) umlaufende Seitenwände umfasst, die an ihren stromaufwärtigen Enden über einen Ringkammerboden (28), welcher mit Krafteinspritzungsvorrichtungen ausgestattet ist, verbunden sind, **dadurch gekennzeichnet, dass** sie Vorrichtungen zum Aufhängen (50) des stromaufwärtigen Endes der Brennkammer (48) an einem Außengehäuse (18) umfasst, wobei diese Vorrichtungen mindestens eine Gelenkstange aufweisen, die an ihren Enden an einer Wand der Brennkammer (48) und am Außengehäuse gelenkig gelagert sind, wobei das stromabwärtige Ende der Brennkammer (48) über Verbindungen oder weiche Auflagen (32, 76) mit einem inneren (14) oder äußeren Gehäuse (18) verbunden ist.

2. Strömungsmaschine nach Anspruch 1, **dadurch gekennzeichnet, dass** sich die Gelenkstange (50) auf einer Ebene erstreckt, welche durch die Achse (16) der Strömungsmaschine verläuft.

3. Strömungsmaschine nach Anspruch 1 oder 2, **dadurch gekennzeichnet, dass** ein Ende der Gelenkstange (50) gelenkig auf dem stromaufwärtigen Ende der umlaufenden äußeren Seitenwand (26) gelagert ist, und das andere Ende in einer Vertiefung (72) des Gehäuses (18) nach außen vorstehend gelenkig aufliegt.

4. Strömungsmaschine nach einem der Ansprüche 1 bis 3, **dadurch gekennzeichnet, dass** jedes Ende der Gelenkstange (50) in einer Querachse auf einem zylindrischen Schaft (62), welcher in den Öffnungen eines Gabelgelenks (56) der äußeren Wand (26) der Kammer oder des Gehäuses (18) montiert ist, gelenkig lagert ist.

5. Strömungsmaschine nach Anspruch 4, **dadurch gekennzeichnet, dass** Führungsbuchsen (58) in die Öffnungen der Gabelgelenke (56) gepresst sind.

6. Strömungsmaschine nach Anspruch 4 oder 5, **dadurch gekennzeichnet, dass** die Enden der Gelenkstange (50) über Kugelgelenke (54), durch welche zylindrischen Schäfte (62) verlaufen, an diesen Schäften gelenkig gelagert sind.

7. Strömungsmaschine nach einem der Ansprüche 1 bis 6, **dadurch gekennzeichnet, dass** sie drei Gelenkstangen (84, 86, 88) umfasst, welche auf der oberen Umfangshälfte der äußeren Wand (26) der Kammer verteilt sind, wobei eine Gelenkstange (84) in einer senkrechten Ebene durch die Achse (16) der Strömungsmaschine verläuft, und die beiden anderen Gelenkstangen (86, 88) zu beiden Seiten dieser senkrechten Ebene symmetrisch angeordnet sind.

8. Strömungsmaschine nach einem der Ansprüche 1 bis 7, **dadurch gekennzeichnet, dass** die oder jede Gelenkstange (50) im Wesentlichen parallel zur Achse (16) der Strömungsmaschine steht.

9. Strömungsmaschine nach einem der Ansprüche 1 bis 8, **dadurch gekennzeichnet, dass** die oder jede Gelenkstange (50) Vorrichtungen, zum Beispiel Schrauben, zur Längenverstellung aufweist.

10. Strömungsmaschine nach einem der Ansprüche 1 bis 9, **dadurch gekennzeichnet, dass** die oder jede Gelenkstange (50) zwischen den Kraftstoffeinspritzvorrichtungen (38) mit der äußeren Wand (26) der Kammer verbunden ist.

11. Strömungsmaschine nach Anspruch 1, **dadurch gekennzeichnet, dass** die Verbindung oder die weiche Auflagerung mit einem weichen Verbindungsteil (76) erfolgt, das durch Schweißen oder Löten an der Kammer befestigt ist und im Wesentlichen radial auf einem Gehäuse aufliegt.

12. Strömungsmaschine nach einem der vorhergehenden Ansprüche, **dadurch gekennzeichnet, dass** das.hintere Ende der inneren Wand (24) der Kammer über einen biegsamen ringförmigen Flansch (32) mit einem Innengehäuse (14) verbunden ist.

13. Strömungsmaschine nach einem der vorhergehenden Ansprüche, **dadurch gekennzeichnet, dass** die ringförmige Brennkammer (48) konvergierend ist und vorgeschaltet in das Außengehäuse (18) montiert ist.

## Claims

1. A turbomachine comprising an annular combustion chamber (48), comprising a radially inner (24) wall and a radially outer (26) wall, these walls exhibiting a symmetry of revolution with respect to the axis (16) of the turbomachine, and being connected at their upstream ends by an annular chamber end wall (28) equipped with fuel-injection means, wherein the turbomachine comprises suspension means (50) for suspending the upstream end of the combustion chamber (48) from an outer casing (18), these means comprising at least one link rod articulated at its ends to a wall of the combustion chamber (48) and to the outer casing, the downstream end of the combustion chamber (48) being connected to an inner casing (14) or outer casing (18) by flexible connections or mounts (32,76).

2. The turbomachine according to claim 1, wherein the link rod (50) lies in a plane that passes through the axis (16) of the turbomachine.

3. The turbomachine according to claim 1 or 2, wherein one end of the link rod (50) is articulated to the upstream end of the outer wall of revolution (26), its other end being housed and articulated in an outwardly projecting boss (72) belonging to the outer casing (18).

4. The turbomachine according to claims 1 to 3, wherein each end of the link rod (50) is articulated about a transverse axis on a cylindrical pin (62) mounted in holes in a clevis (56) belonging to the outer wall (26) of the chamber or of the outer casing (18), respectively.

5. The turbomachine according to claim 4, wherein guide bushings (58) are set into the holes in the clevises (56).

6. The turbomachine according to claim 4 or 5, wherein the ends of the link rod (50) are articulated on the cylindrical pins (62) by means of ball swivels (54) through which these pins (62) pass.

7. The turbomachine according to claims 1 to 6, wherein it comprises three link rods (84, 86, 88) distributed over the upper half-circumference of the outer wall (26) of the chamber, one link rod (84) lying in a vertical plane that passes through the axis (16) of the turbomachine, the other two link rods (86, 88) being positioned symmetrically on each side of this vertical plane.

8. The turbomachine according to claims 1 to 7, wherein the or each link rod (50) is substantially parallel to the axis (16) of the turbomachine.

9. The turbomachine according to claims 1 to 8, wherein the or each link rod (50) comprises means, for example screw means, for adjusting length.

10. The turbomachine according to claims 1 to 9, wherein the or each link rod (50) is connected to the outer wall (26) of the chamber between fuel injectors (38).

11. The turbomachine according to claim 1, wherein the flexible connection or mount is obtained via a flexible connecting piece (76) welded or brazed to the chamber and resting substantially radially against a casing.

12. The turbomachine according to any preceding claim, wherein the downstream end of the inner wall (24) of the chamber is connected by a flexible annular flange (32) to an inner casing (14).

13. The turbomachine according to any preceding claim, wherein the annular combustion chamber (48) is convergent and mounted from the upstream end inside the outer casing (18).
